Europäisches Patentamt

European Patent Office

Office européen des brevets

(11) Veröffentlichungsnummer: **0 602 479 A2**

# EUROPÄISCHE PATENTANMELDUNG

(21) Anmeldenummer: **93119538.2**

(22) Anmeldetag: **03.12.93**

(51) Int. Cl.5: **G01D 5/245**

(30) Priorität: **14.12.92 DE 4242145**

(43) Veröffentlichungstag der Anmeldung:
**22.06.94 Patentblatt 94/25**

(84) Benannte Vertragsstaaten:
**AT BE CH DE ES FR GB GR IT LI NL SE**

(71) Anmelder: **SIEMENS AKTIENGESELLSCHAFT**
**Wittelsbacherplatz 2**
**D-80333 München(DE)**

(72) Erfinder: **Cuylen, Michael**
**Kantstrasse 69**
**D-90513 Zirndorf(DE)**

(54) **Vorrichtung zum Ausgleich eines Fehlwinkels zwischen einem cosinus- und einem sinusförmigen, lageabhängigen Messsignal bei einem Winkelgeber bzw. einem Linearmassstab.**

(57) Die erfindungsgemäße Korrekturschaltung (MS) weist einen Summierer (SM) und einen Subtrahierer (SB) auf. Beiden wird ein erstes Paar an Meßsignalen ( $M1 = A^* \cos \phi$, $M2 = A^* \sin (\phi + \beta(\phi))$ ) zugeführt, welche bei Nichtauftreten eines Fehlwinkels ($\beta(\phi)$ rein cosinus- und sinusförmig sind. Die Meßsignale werden von einem drehbaren oder linear verschiebbaren Codeträger (WG) im Geber abgetastet. Aufgrund der erfindungsgemäßen Summierung ( $M1 + M2$ ) und Subtrahierung ( $M1 - M2$ ) entsteht ein zweites Paar an Meßsignalen ( $S1 = B^* \sin (\phi + \gamma)$, $S2 = C^* \cos (\phi + \gamma)$, welches bei jedem Wert des Lauffaktors ($\phi$) eine übereinstimmende, von einem möglichen Fehlwinkel ($\beta(\phi)$ unabhängige Phasenverschiebung ($\gamma = 45° + 1/2 \ \beta(\phi)$) aufweisen.

FIG 1

Die Erfindung betrifft eine Vorrichtung zum Ausgleich eines Fehlwinkels.

Lagegeber, insbesondere Geber zur Erfassung der aktuellen Winkellage einer Welle bzw. der aktuellen Verschiebungsposition eines Linearmaßstabes, bilden lageabhängige, d.h. winkel- bzw. wegabhängige Signale mit möglichst gleicher Amplitude und Periode. Hierbei handelt es sich meist um Meßsignale, welche möglichst ideal cosinus- und sinusförmig zueinander sein sollen und eine Phasenverschiebung von 90° zueinander aufweisen. Aus einem oder mehreren Paaren von derartigen Meßsignalen wird dann in einer Auswerteschaltung des Gebers eine die aktuelle Winkellage bzw. Linearposition des Meßobjektes kennzeichnende Größe abgeleitet. Eine derartige Auswerteschaltung ist z.B. aus der Europäischen Patentanmeldung EP 0 325 981 A1 bekannt.

Der Lagegeber kann z.B. nach dem optischen Prinzip arbeiten. Er weist dabei einen rotierenden bzw. linear verschiebbaren Codeträger in Form einer transparenten bzw. reflektierenden Scheibe auf. Diese ist mit Spuren belegt, die Bereiche mit abwechselnd hoher bzw. niedriger Lichtdurchlässigkeit aufweisen. Die Bereiche können z.B. dreieckförmig, in der Breite analog veränderlich oder inkrementell, d.h. mit äquidistanten Bereichen abwechselnd hoher bzw. niedriger Lichtdurchlässigkeit bzw. Refektionsfähigkeit, ausgeführt sein. Eine Lichtquelle dient zur Be- bzw. Durchleuchtung der Geberscheibe. Bei Rotation bzw. Linearverschiebung des Codeträgers verursachen die Bereiche mit abwechselnd hoher bzw. niedriger Lichtdurchlässigkeit bzw. Reflektionsfähigkeit auf den Spuren Lichtschwankungen, welche von Sensoren erfaßt und in die oben beschriebenen Meßsignalpaare umgesetzt werden.

Darüber hinaus sind auch Lagegeber bekannt, welche nach magnetischen Prinzipien arbeiten. So ist z.B. in der Deutschen Patentanmeldung mit dem Aktenzeichen P 40 30 450 ein Dreh- oder Linearpositionsgeber beschrieben. Dieser weist einen Codeträger auf, dessen Oberfläche mit mindestens einer Spur aus einer Speicherschicht belegt ist, die ein inkrementelles Muster wechselnder Magnetisierungsrichtungen aufweist. Drehungen bzw. Linearbewegungen des Codeträgers werden in diesem Fall von einem ortsfesten, magnetoresistiven Sensor erfaßt. Dabei verursachen die Magnetisierungsmuster in der Speicherschicht auf der Oberfläche des Codeträgers bei Vorbeigleiten am Sensor einen wechselnden magnetischen Fluß, welcher in mindestens ein Meßsignalpaar der oben beschriebenen Art umgesetzt wird.

Eine weitere Art von Lagegebern weist als Codeträger ein rotierendes Zahnrad bzw. eine linearverschiebbare Zahnstange auf. Ein derartiger "Zahnradgeber" ist z.B. im Deutschen Gebrauchsmuster mit dem Aktenzeichen G 91 10 524 beschrieben. In diesem Fall wird eine durch Bewegung der Zahnrad- bzw. Zahnstangenaußenseite hervorgerufene abwechselnd hohe bzw. niedrige magnetische Kopplung von einem magnetischen Sensor erfaßt, und bei entsprechender Form der Zähne bzw. der dazwischen liegenden Nuten in mindestens ein Paar der oben genannten Meßsignale umgesetzt. Schließlich sind noch weitere Formen von rotierenden bzw. linearverschiebbaren Codeträgern denkbar, welche ebenfalls Meßsignalpaare der oben genannten Art abgeben.

Für die Genauigkeit der Erfassung des aktuellen Wertes der Winkellage bzw. Linearposition ist es bei allen Gebern von ausschlaggebender Bedeutung, daß die Meßsignale eines jeden Paares möglichst ideal cosinus- und sinusförmig zueinander sind, d.h. eine von der aktuellen Winkellage bzw. Linearposition unabhängige konstante Phasenverschiebung von 90° zueinander aufweisen. In der Praxis gibt es jedoch eine Vielzahl von Ursachen, welche einen unerwünschten, u.U. sogar von der aktuellen Winkellage bzw. Linearposition abhängigen Fehlwinkel bzw. Phasenfehler zwischen den cosinus- und sinusförmigen Meßsignalen eines jeden Paares hervorrufen können.

So können z.B. unvermeidbare fertigungstechnische Toleranzen eine mechanische Schiefstellung des rotierenden bzw. linear verschiebbaren Codeträgers relativ zu den ortsfesten, die Codeträgeroberfläche abtastenden Sensoren verursachen. Codeträger und Sensoren nehmen in diesem Fall somit keine ideale und ggf. zusätzlich lageabhängig veränderliche Relativposition zueinander ein. Derartige mechanische Toleranzen zwischen Codeträger und Sensoren können einen, die gewünschte Phasenverschiebung von 90° zwischen den cosinus- und sinusförmigen Meßsignalen störenden Fehlwinkel verursachen.

Eine weitere Ursache für einen Fehlwinkel können Toleranzen in den Maßen des Codeträgers selbst bzw. der aufgebrachten Spuren sein. So können z.B. bei einer optischen Geberscheibe die Bereiche mit abwechselnd hoher bzw. niedriger Lichtdurchlässigkeit bzw. Reflektionsfähigkeit auf einer Inkrementalspur nicht exakt gleich groß und äquidistant sein. Auch bei Zahnradgebern ist ein jeder Zahn mit formbedingten Toleranzen behaftet. Eine weitere Ursache von Fehlwinkeln kann in der Erwärmung des Meßsystems liegen. Auch in diesem Fall wird duch Ausdehnung einer als Codeträger dienenden optischen Geberscheibe bzw. eines Meßzahnrades bzw. einer Zahnstange die Relativposition zwischen Codeträger und ortsfesten Abtastsensoren beeinträchtigt. Abhängig vom jeweiligen mechanischen Aufbau insbesondere des Codeträgers und der Sensoreinheit im Lagegeber, und abhängig von dem zur Lageerfassung eingesetzten Meßprinzip können im Einzelfall weitere Einflüsse auftreten, welche einen exemplarbedingten und lokal veränderlichen Fehlerwinkel in der Phasenlage eines jeden Paares von cosinus- und sinusförmigen Meßsignalen verursachen.

Der Erfindung liegt die Aufgabe zugrunde, eine Meßschaltung anzugeben, die aus einem ersten Paar von fehlerwinkelbehafteten cosinus- und sinusförmigen Meßsignalen ein zweites Paar von fehlerwinkelfreien Meßsignalen abgeleitet.

Die Aufgabe wird gelöst mit der im Anspruch angegebenen Vorrichtung. Die Erfindung wird desweiteren anhand eines in den nachfolgend kurz angeführten Figuren dargestellten Ausführungsbeispieles näher beschrieben. Dabei zeigt

FIG 1　beispielhaft einen Ausschnitt von der Oberfläche einer optischen Geberscheibe, und die erfindungsgemäße Vorrichtung in der Darstellung als Blockschaltbild,

FIG 2　beispielhaft ein erstes Paar von cosinus- und sinusförmigen Meßsignalen, welches einen Phasenfehlerwinkel aufweist, und

FIG 3　ein am Ausgang der erfindungsgemäßen Vorrichtung von FIG 1 auftretendes, phasenfehlerwinkelfreies zweites Paar an Meßsignalen.

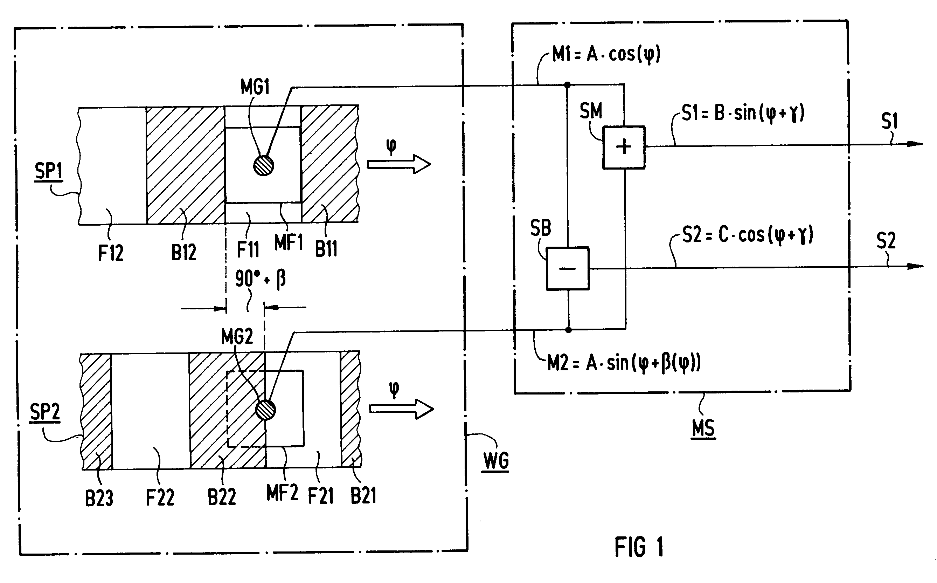

In FIG 1 ist beispielhaft ein Ausschnitt WG von der Oberfläche einer als Codeträger dienenden "optischen" Geberscheibe strichpunktiert umrahmt dargestellt. Darin sind beispielhaft zwei zueinander korrespondierende Inkrementalspuren SP1,SP2 aus äquidistanten Bereichen mit abwechselnd hoher und niedriger Lichtdurchlässigkeit dargestellt. Dabei weist der dargestellte Ausschnitt von Spur SP1 die Bereiche B11,B12 mit niedriger Lichtdurchlässigkeit ("Stege") und die Bereiche F11,F12 mit hoher Lichtdurchlässigkeit ("Schlitze") auf. Entsprechend weist der von Spur SP2 dargestellte Ausschnitt die Bereich B21,B22,B23 mit niedriger Lichtdurchlässigkeit ("Stege") und die Bereiche F21,F22 mit hoher Lichtdurchlässigkeit ("Schlitze") auf. Ferner sei angenommen, daß sich die Geberscheibe WG und mit ihr die Inkrementalspuren SP1,SP2 in eine Richtung bewegen, die in FIG 1 jeweils durch einen mit dem Lauffaktor $\phi$ markierten Pfeil angedeutet ist. Abhängig von Größe und Form der Geberscheibe WG kann es sich bei dieser Bewegung um eine Linearverschiebung handeln, wobei in diesem Fall die Spuren SP1,SP2 eine geradlinige Form aufweisen. Andererseits kann diese Bewegung auch eine Drehung sein, so daß in diesem Fall die Ausschnitte der Spuren SP1,SP2 in FIG 1 Ringsegmente darstellen.

Bei der Geberscheibe WG im Beispiel der FIG 1 ist jeder Inkrementalspur SP1 bzw.SP2 ein optischer Meßgeber MG1 bzw. MG2 zugeordnet, welcher sich im Inneren eines dazugehörigen Meßfensters MF1 bzw.MF2 befindet. Die Meßfenster haben dabei eine Breite, welche annähernd der Breite der Bereiche mit hoher bzw. niedriger Lichtdurchlässigkeit der Spurrillen SP1,SP2 entsprechen.

Die Darstellung in FIG 1 ist beispielhaft so gewählt, daß die Geberscheibe WG und mit ihr die erste Inkrementalspur SP1 gerade eine solche Position einnimmt, daß der Bereich F11 mit hoher Lichtdurchlässigkeit vollständig oberhalb des Meßfensters MF1 zu liegen kommt. Kein Teil des Meßfensters ist somit durch einen der benachbarten Bereiche B11,B12 mit niedriger Lichtdurchlässigkeit abgedeckt. Bei Beleuchtung der Geberscheibe WG kann in diesem Fall der Meßgeber MG1 durch das Meßfenster MF1 eine maximale Lichtmenge erfassen, so daß das von ihm erzeugte erste Meßsignal M1 bei dieser Lage einen maximalen Wert aufweist.

Relativ zu den Bereichen mit niedriger bzw. hoher Lichtdurchlässigkeit B11,B12 bzw. F11,F12 der Spur SP1 sind die entsprechenden Bereiche mit niedriger bzw. hoher Lichtdurchlässigkeit B21,B22 bzw. F21,F22 auf der Spur SP2 so versetzt angeordnet, daß ein im Vergleich zum Meßgeber MG1 lagegleicher Meßgeber MG2 im Meßfenster MF2 der Spur SP2 ein zweites Meßsignal M2 erzeugt, welches zum Meßsignal M1 um 90° phasenversetzt ist. Dementsprechend ist wiederum in FIG 1 die Darstellung gerade so gewählt, daß das Meßfenster MF2 und der darin befindliche Meßgeber MG2 über den Bereich F21 mit hoher Lichtdurchlässigkeit nur noch zur Hälfte bestrahlt ist, während die andere Hälfte vom Bereich B22 mit niedriger Lichtdurchlässigkeit abgedeckt ist.

Bei Bewegung der Geberscheibe WG und damit der ersten und zweiten Inkrementalspur SP1,SP2 in Richtung des Lauffaktores $\phi$ entsteht somit am Ausgang der Meßgeber MG1,MG2 ein erstes Paar an Meßsignalen M1 = A · cos $\phi$, M2 = A · sin ($\phi$ + $\beta(\phi)$). Es sein angenommen, daß die Meßsignale M1,M2 zwar ideal cosinus- und sinusförmig sind, jedoch einen lageabhängigen, d.h. vom Lauffaktor $\phi$ der trigonomitrischen Funktionen abhängigen Phasenfehlerwinkel $\beta(\phi)$ aufweisen.

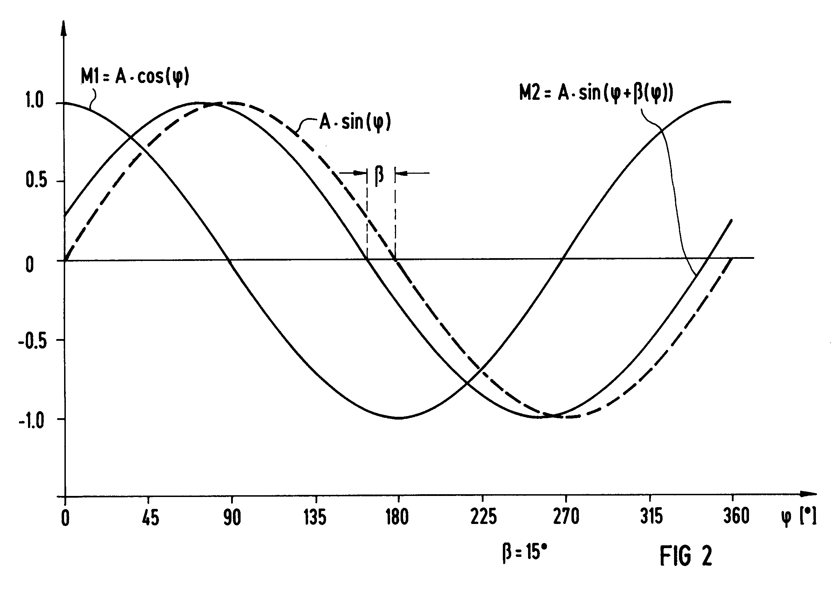

In FIG 2 ist beispielhaft ein derartiges Paar von Meßsignalen M1 und M2 dargestellt. Dabei ist beispielhaft angenommen, daß der Phasenfehlerwinkel $\beta$ den lageunabhängigen, konstanten Wert von 15° aufweist. Ferner ist angenommen, daß sich das erste, cosinusförmige Meßsignal M1 = A · cos $\phi$ im Koordinatenursprung befindet und demgegenüber das zweite, sinusförmige Meßsignal M2 = A · sin ($\phi$ + $\beta(\phi)$) den Fehlerwinkel von $\beta$ = 15° aufweist. Zur Verdeutlichung ist in FIG 2 zusätzlich zum fehlerwinkelbehafteten zweiten Meßsignal M1 ein reiner sinusförmiger Verlauf A • sin ($\phi$) in strichlierter Linie eingetragen. Der Fehlerwinkel $\beta$ = 15° ist besonders deutlich zwischen dem Nulldurchgang des strichlierten Kurvenverlaufes A • sin ($\phi$) bei 180° und dem Nulldurchgang des Verlaufes M2 bei 165° ablesbar.

Im rechten Bereich von FIG 1 ist die erfindungsgemäße Korrekturschaltung MS strichpunktiert umrahmt in Form eines Blockschaltbildes dargestellt. Sie besteht aus einem Summierer SM und einem Subtrahierer SB, welche bevorzugt in Form von Operationsverstärkerschaltungen aufgebaut werden können. Erfindungsgemäß werden sowohl dem Summierer SM als auch dem Subtrahierer SB das erste Meßwertpaar M1 = A • cos $\phi$, M2 = A • sin ($\phi$ + $\beta(\phi)$) zugeführt. .

Durch Summierung M1 + M2 und Subtrahierung M1 - M2 wird erfindungsgemäß ein zweites Paar an Meßsignalen

S1 = B • sin ($\phi$ + $\gamma$),S2 = C • cos ($\phi$ + $\gamma$)

gebildet. Erfindungsgemäß zeichnen sich die Meßsignale S1, S2 derart aus, daß sie bei jedem Wert des Lauffaktors $\phi$ der trigonometrischen Funktionen eine übereinstimmende Phasenverschiebung von

$\gamma$ = 45° + 1/2 $\beta(\phi)$

relativ zu einem Bezugspunkt aufweisen. Die Meßsignale S1,S2 sind somit ideal cosinus- und sinusförmig zueinander, und weisen bei jedem Wert des Lauffaktores $\phi$ unabhängig vom Vorhandensein und dem jeweiligen, gegebenenfalls lageabhängigen Wert eines Fehlerwinkels $\beta(\phi)$ eine konstante Phasenverschiebung von 90° zueinander auf.

Die erfindungsgemäße Korrekturschaltung weist den Vorteil auf, daß ohne genaue Kenntnis eines möglicherweise vorhandenen Phasenfehlerwinkels $\beta(\phi)$ zu jedem Zeitpunkt und bei jedem Wert des Lauffaktores $\phi$, d.h. bei jeder Winkellage bzw. Linearposition des Gebers ein Paar S1,S2 von ideal cosinus- und sinusförmigen Meßsignalen zur Verfügung steht. Mit Hilfe dieser fehlerwinkelfreien Meßsignale kann in bekannten, hier nicht näher erläuterten Auswerteschaltungen der Istwert der Lageposition der Geberschreibe WG und damit verbundener Maschinenelemente ständig mit hoher Genauigkeit meßtechnisch erfaßt werden.

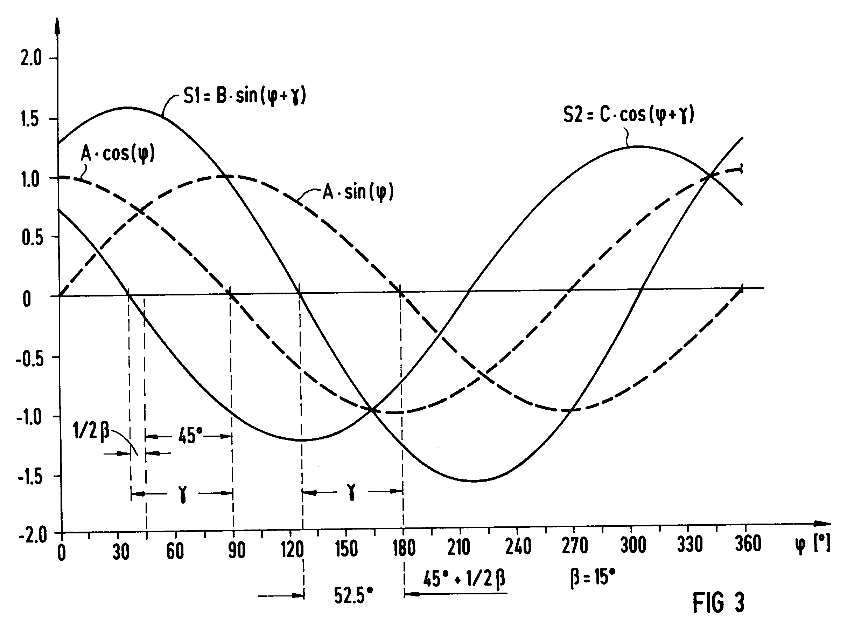

In FIG 3 ist schließlich das Paar an fehlerwinkelfreien Meßsignalen S1,S2 dargestellt, welches sich mit Hilfe der erfindungsgemäßen Korrekturschaltung unter Zugrundelegung der in FIG 2 dargestellten, fehlerwinkelbehafteten Meßsignal M1,M2 ergibt. Als Referenz sind in FIG 3 zusätzlich zur besseren übersicht die Funktionen A • cos ($\phi$) und A • sin ($\phi$) in strichlierter Linie zur besseren Übersicht zusätzlich dargestellt.

Bei Zugrundelegung des in den Figuren 2,3 beispielhaft angenommenen, konstanten Phasenfehlerwinkels $\beta$ = 15° weist die Phasenverschiebung der beiden Meßsignale S1,S2 am Ausgang der Korrekturschaltung MS übereinstimmend den Wert $\gamma$ = 45° + 1/2 $\beta(\phi)$ = 45° + 1/2 • 15° = 52,5° auf.

Diese Größe ist in FIG 3 durch strichpunktierte Linien z.B. zwischen dem Nulldurchgang von A • sin ($\phi$) bei 180° und dem Nulldurchgang von S1 bei 127,5° dargestellt. Desweiteren ist diese Größe eingetragen zwischen dem Nulldurchgang von A • cos ($\phi$) bei 90° und dem Nulldurchgang von S2 bei 37,5°.

Bei Vorliegen des zweiten, fehlerwinkelfreien Paares an Meßsignalen S1,S2 ist es mit weiteren, im Detail nicht dargestellten Elementen leicht möglich, die unterschiedlichen Amplituden B,C der Signale S1,S2 anzugleichen. Nach einer derartigen Maßnahme stehen ideal cosinus- und sinusförmige, phasenfehlerfreie und amplitudengleiche Meßsignale zur Verfügung, welche besonders vorteilhaft zur hochgenauen Bestimmung der aktuellen Lageposition eines Winkellagegebers bzw. eines Linearmaßstabes benutzt werden können, d.h. zur Bestimmung des jeweiligen Wertes des Lauffaktores $\phi$.

Mit Hilfe des zweiten Paares an Meßsignalen S1,S2 ist es desweiteren vorteilhaft möglich, den Fehlerwinkel bei jedem Wert des Lauffaktors $\phi$ zu bestimmen. Um dies zu erreichen wird z.B. bei einer ersten Ausführungsform der im Moment des Nulldurchganges des zweiten Meßsignales S2 auftretende Wert des Lauffaktores $\phi$ meßtechnisch erfasst. Gemäß der Beziehung

S2 = 0 = C • cos ($\phi$(S2 = 0) + 1/2 $\beta$ + 45°)

muß der cos in diesem Punkt den Winkelwert 90° aufweisen, d.h.

90° = $\phi$(S2 = 0) + 1/2 $\beta$ + 45°.

Durch Gleichungsumstellung ergibt sich schließlich für den Wert des Fehlerwinkels an dieser Stelle

$\beta$ = 2 • (45° - $\phi$(S2 = 0).

**Patentansprüche**

1. Vorrichtung zum Ausgleich eines Fehlwinkels ($\beta(\phi)$) zwischen

    a) einem ersten Paar von Meßsignalen ( M1 = A* cos $\phi$, M2 = A* sin ($\phi$ + $\beta(\phi)$) ), die in einem Geber zur Erfassung der Winkellage einer Welle bzw. einer Linearposition durch Abtastung (MF1,MG1; MF2,MG2) eines drehbaren oder linear verschiebbaren Codeträgers (WG; SP1: B11,F11,B12,F12; SP2: B21,F21,B22, F22,B23) gewonnen werden, und

bei Nichtauftreten eines Fehlwinkels ($\beta(\phi)$) mit gleichem Lauffaktor ($\phi$) rein cosinus- und sinusförmig zueinander sind, mit

b) einer Korrekturschaltung (MS) aus einem Summierer (SM) und einem Subtrahierer (SB), welche durch

Summierung (M1 + M2) und Subtrahierung (M1 - M2) der Meßwerte des ersten Paares (M1 = A* cos $\phi$, M2 = A* sin ($\phi$ + $\beta(\phi)$)) ein zweites Paar von Meßsignalen (S1 = B* sin ($\phi$ + $\gamma$), S2 = C* cos ($\phi$ + $\gamma$)) derart bildet, daß die Meßsignale des zweiten Paares bei jedem Wert des Lauffaktors ($\phi$) eine von einem möglichen Fehlwinkel $\beta(\phi)$ unabhängige, übereinstimmende Phasenverschiebung ($\gamma$ = 45° + 1/2 $\beta(\phi)$) relativ zu einem Bezugspunkt aufweisen und ideal cosinus- und sinusförmig zueinander sind.

FIG 1

EP 0 602 479 A2

$M1 = A \cdot \cos(\varphi)$

$A \cdot \sin(\varphi)$

$M2 = A \cdot \sin(\varphi + \beta(\varphi))$

$\beta$

$\beta = 15°$

FIG 2

FIG 3

EP 0 602 479 A2